Europäisches Patentamt

European Patent Office

Office européen des brevets

(11) Publication number: **0 467 483 A1**

## EUROPEAN PATENT APPLICATION

(21) Application number: **91201899.1**

(22) Date of filing: **18.07.91**

(51) Int. Cl.⁵: **C04B 28/08**, E01C 3/06,
E01C 5/00, C04B 38/08,
//(C04B28/08,14:10,18:18)

(30) Priority: **19.07.90 NL 9001648**

(43) Date of publication of application:
**22.01.92 Bulletin 92/04**

(84) Designated Contracting States:
**BE DE DK FR GB NL**

(71) Applicant: **TWENTSE RECYCLING MAATSCHAPPIJ**
**Onyxstraat 20,**
**NL-7554 TP Hengelo(NL)**

(72) Inventor: **Bruins Slot, Albert**
**Elisabethstraat 61**
**NL-7555 JD Hengelo(NL)**

(74) Representative: **Smulders, Theodorus A.H.J., Ir. et al**
**Vereenigde Octrooibureaux, Nieuwe Parklaan 97**
**NL-2587 BN Den Haag(NL)**

(54) **Method of making a fluid tight stone foundation.**

(57) This invention relates to a method of making a fluid tight stone foundation. The method comprises first forming a mixture containing as essential components a granular aggregate, a mineral binder, bentonite and water, in which
- the granular aggregate is a completely or practically completely inorganic granulate, the granular size distribution of which satisfies the following specification:

| screen mesh (cumulative) (according to NEN 2560) | screen residue (wt.%) |
|---|---|
| C 31.5 mm | < 30 |
| C 8 mm | 10-65 |
| C 2 mm | 40-80 |

- the mineral binder and the bentonite, taken together, are used in an amount of 10-100 g per 1 kg dry granulate, and
- the weight ratio of mineral binder to bentonite ranges from 1/1 to 5/1.

EP 0 467 483 A1

This invention relates to a method of making a fluid tight stone foundation on the basis of a granular aggregate and a mineral binder.

Stone foundations have long since been used in all types and constructions. Traditional stone foundations, however, are not fluid tight. The object of this invention is to provide a fluid tight stone foundation which also has a high structural strength and is particularly suited for use in road-building, especially for the purpose of preventing all sorts of pollutants from penetrating through the road surface into the subsoil or surrounding soil and polluting it.

It is known to use fluid tight plastic foils to cope with the above described problem of pollution owing to seepage. Plastic foils, however, only have a limited mechanical strength and durability and are relatively expensive so that they cannot be used for a large number of important applications.

It is further known, for example, to restrain a refuse dump by digging ditches around it and filling these ditches with a slurry on the basis of water, blast furnace cement and bentonite. This technique is extensively discussed in a publication by H. Meseck, entitled "Mechanische Eigenschaften von mineralischen Dichtwandmassen", published in Mitteilung des Instituts für Grundbau und Bodenmechanik, Technical University of Braunschweig, Vol. No. 25, Braunschweig, FRG, 1987. Although a tolerable sealing can thus be obtained, the sealing walls made have little structural strength or bearing power, and even if the slurry is mixed with sand, the resulting strength is insufficient for numerous applications which also require a high compressive strength, for example as a foundation layer in road-building.

French patent 944,237 discloses the incorporation of a clay having swelling power, such as bentonite, in a mortar or concrete designed for the manufacture of floor slabs or tiles. Thus products are obtained having a smooth surface and being higly water-impermeable. However, the compositions described in the French patent are silent on how to obtain a fluid tight stone foundation having a high structural strength.

Finally, German patent application 2,438,801 discloses a methof of making a road foundation. This foundation is composed of materials having different granular sizes, such as gravel, sand and rubble, to which bentonite is added to obtain improved frost resistance. The object of this invention is quite different, namely the making of a fluid tight stone foundation which has a high structural strength at the same time. This last property is in no way inherent in the road foundation made according to the above-mentioned German patent application.

It has now been found that by using a granulate satisfying the specification given below, in combination with a mineral binder and bentonite, in the manner as will be indicated below, there can be obtained a stone foundation which, in addition to a high strength, also has excellent fluid tightness.

This invention is therefore characterized in that a fluid tight stone foundation is made by
- forming a mixture containing as essential components a granular aggregate, a mineral binder, bentonite and water, in which
   - the granular aggregate is a completely or practically completely inorganic granulate, the granular size distribution of which satisfies the following specification:

```
screen mesh              screen residue (cumulative)

(according to NEN 2560)      (wt.%)

C 31.5 mm                    < 30

C 8     mm                   10-65

C 2     mm                   40-80
```

   - the mineral binder and the bentonite, taken together, are used in an amount of 10-100 g per 1 kg dry granulate, and
   - the weight ratio of mineral binder to bentonite ranges from 1/1 to 5/1,
- applying the mixture in a layer of the desired thickness, and
- compacting this layer.

A fluid tight stone foundation as used herein is a stone foundation having a water permeability less than $1.10^{-10}$ m/s. The stringent requirements of preventing soil pollution have thus been met. That the stone foundation made has a high strength means that the compressive strength has a value of at least 1.0 MPa after 7 days of hardening. Therefore, the foundation layer is load resistant already after a relatively short time, which is of high practical value. The final compressive strength is of course much higher. It is surprising that these excellent properties concerning fluid tightness and strength can be obtained with a granulate which preferably consists completely or largely of rubble granulate from demolition work which may also contain a considerable amount of porous material, for example remainders of bricks and pointing.

According to this invention the granular aggregate employed may be any completely or practically completely inorganic material, the granular size distribution of which satisfies the specification given above. In fact, stone materials or stony materials are thereby meant, which may be of different origin and which may contain up to about 1 wt.% digestible organic materials, e.g., wood, paper, etc. Examples of such materials are: concrete granulate, masonry granulate, mixed granulate (at least 50% concrete and not more than 50% masonry), asphalt granulate mixed with sand, gravel/sand mixtures, rubble/sand mixtures, blast furnace slag, different slags as well as mixtures of these granulates together or with other stone (stony) materials. The sand employed may be both breaker sand and natural sand and the rubble may consist of broken gravel, limestone, basalt etc. Preferably, a tolerably continuous gradation is sought, from dust to the maximum size desired in a specific case, the presence of large fragments left on a C 63 mm screen and certainly a C 90 mm screen being completely or nearly completely avoided. Preferably, the granular size distribution is selected so as to satisfy the following specification:

| screen mesh (according to NEN 2560) | screen residue (cumulative) (wt.%) |
|---|---|
| C 31.5 mm | < 5 |
| C 8 mm | 15-45 |
| C 2 mm | 45-70 |

The nature or composition of the granular aggregate to be employed and the granular size distribution produce an effect on the properties (the strength and the water-impermeability) of the stone foundation to be made. By means of simple tests a skilled worker can easily examine what materials and what granular size distribution are suitable for obtaining the desired properties of the stone foundation. In order to make this foundation, the starting material is often rubble granulate from demolition work which may partly consist of a material that is porous per se. It is surprising that with such a starting material a high degree of water-impermeability and a high strength can be obtained after all.

The binder employed is a hydraulic binder of mineral origin which, in use, forms waterproofing compounds. Examples of such binders are particularly the different cement types, such as Portland cement, Portland fly ash cement and blast furnace cement. Blast furnace cement is preferred, particularly blast furnace cement having a high slag content which, for example, is about 65 wt.% or more and preferably at least 70 wt.%. The mineral binder has the fineness conventional for the present use.

The third essential component is bentonite. Bentonite is a plastic clay type consisting of the clay mineral montmorillonite to at least 70% and having a very fine grain (2 $\mu$m or lees). Bentonite is known to have the power of absorbing large amounts of water, thus swelling strongly. This property is to be considered in the separate use of bentonite, as will be discussed further. Preferred according to the invention is the use of activated calcium bentonite and, to a lesser extent, sodium bentonite. Various suitable cement-stable types of bentonite are commercially sold, for example, under the names of Cebo C.S. (Cebo Holland B.V.), Tixoton CV 15 (Südchemie AG), Aktiv-Bentonit-CT (Erbslöh & Co.), Slurry Ben 125 (Volclay International), and FTP 3 (Ceca).

As stated above, a previously composed dry mixture of a mineral binder and bentonite may also be used. Particularly suitable is a ready-for-use mixture of a special blast furnace cement having a high slag content and a cement-stable bentonite. Such a mixture is commercially sold under the name of Solidur (Dyckerhoff AG, Mainz) and has been found excellently suitable for use according to the invention.

The mineral binder and the bentonite, taken together, are used in an amount of 10-100 and preferably of 20-60 g per 1 kg dry granulate, the weight ratio of mineral binder to bentonite ranging from 1/1 to 5/1 and preferably from 1.5/1 to 4/1. The optimum amount and mutual ratio of these two components can be easily determined by a skilled worker on the basis of simple tests, depending on the nature of the ingredients employed, including the granulate, and on the desired fluid tightness and strength of the stone foundation to be made.

The procedure is somewhat different, subject to whether there is started either from a previously prepared dry mixture of mineral binder and bentonite, which binder does not suppress the action of the bentonite, or from mineral binder and bentonite in the form of separate components.

If there is started from a previously prepared dry mixture in which the weight ratio of binder to bentonite is within the range indicated above, that mixture is added to water with vigorous stirring so as to obtain a

4

liquid mixture having a processability acceptable in practice. The stirring must be very intense, for example, with the aid of a high speed mixer. The resulting liquid mixture can be directly mixed with preferably pre-moistened granulate which contains, for example, 4-8 wt.% moisture, some further water being added, if required, in case the moisture already present was insufficient to obtain optimum compaction. The mixture having a total moisture content of, for example, 7-18 wt.%, based on the dry mass, is then ready for casting and further processing to obtain a fluid tight strong foundation layer.

When using bentonite that has not been pretreated and has not been previously mixed with binder, this bentonite is added to water, for example in a weight ratio of 1/4-1/6 (bentonite : water) and vigorously mixed therewith, for example with a high speed mixer. Then the mixture is allowed to rest for a considerable time, for example for 18-24 hours, so as to ensure good water absorption and swelling of the bentonite. This process is also called ripening. Subsequently, the mineral binder which may have been previously mixed with water and the liquid bentonite mixture are added in a mixing vessel to pre-moistened granulate and thoroughly mixed therewith, additional water being added, if required, to obtain the moisture content optimal for compaction which, in this case too, usually ranges from 7 to 18 wt.%, based on the dry mixture.

The ready-for-use mixture obtained, for example by one of the above described techniques, is then poured onto a suitable base, for example a bed of sand, and evenly distributed thereon and then compacted, for example with a roller, so that the degree of compaction of the resulting layer is at least 98% and preferably even at least 100% of the normal Proctor density, which serves as a reference and is determined as described further. That degree of compaction is important because it is a measure for the strength and, to a certain extent, also for the fluid tightness of the stone foundation. When transporting and processing the slurry, dehydration and raining in must be avoided.

The present stone foundation is usually made in a thickness of from 15 to 40 cm, but this is of course dependent on the specific use. In case of a rather great thickness the stone foundation can also be poured in two or more times, compaction preferably being carried out each time. The final stone foundation is evenly sprayed within about 1 hour after compaction with a protective layer, for example a bitumen emulsion type 0, and then sand is sprinkled on. In case of precipitation this treatment must be delayed until the precipitation has ceased. A finishing layer or road surface that is open per se, for example of asphalt, clinker or concrete, can then be applied onto the present stone foundation. Thus, a permeable upper layer can still be closed at the bottom by using the present foundation layer.

The present process is particularly intended for use in road-building in a broad sense, more in particular in places where there is a risk of soil pollution through penetration of polluting substances, especially in case of open pavings. To be considered specifically in this respect are roads and squares in town and village centres, factory sites where there is a risk of pollution through chemicals, workshops, storage sites, (temporary) dumps, waste matter depots, boathouses, garages, filling stations , airports, harbour areas etc. Even under normal conditions of use these are vulnerable areas, but if an accident or calamity occurs in these areas, irreparable damage will be caused to the deeper strata and the groundwater. There is an increasing awareness of this being absolutely inadmissible. The invention therefore provides a simple, practical and efficient solution to that problem since the present stone foundation anyhow limits possible pollution and, if required, further action can be taken in a relatively easy manner by combination with suitable drainage or, in the worst case, by replacing the upper or finishing layer.

The invention will be explained below in more detail on the basis of a number of test descriptions and measuring results.

Example
_____

The granular aggregate employed is a mixed granulate, the granular distribution and the composition of which are shown in Tables 1 and 2 below. The granular distribution is determined by test 6 of the Standard RAW Determinations 1985 (Stichting Rationalisatie en Automatisering Grond-, Water- en Wegenbouw, Ede, The Netherlands), namely by wet screening. The composition is determined at the fraction on screen C8.

**Table 1.** Granular distribution mixed granulate.

| Screen according to NEN 2560 | screen residue mixed granulate (wt.%) |
|---|---|
| C45 | 0.0 |
| C31.5 | 1.3 |
| C22.4 | 5.4 |
| C16 | 13.2 |
| C 8 | 28.8 |
| C 4 | 41.7 |
| 2 mm | 50.7 |
| 63 µm | 93.6 |

**Table 2.** Composition mixed granulate

| Constituent | wt.% of the fraction on screen C8 |
|---|---|
| **Main constituents:** | |
| − gravel/rubble concrete and other stony materials (> 2100 kg/m³) | 68.3 |
| − other stony materials (> 2100 kg/m³) | 0.0 |
| − masonry rubble and other stony materials (> 1600 kg/m³) | 19.9 |
| **Additional constituents:** | |
| − different stone material (including asphalt rubble) | 11.7 |
| − asphalt rubble | 0.1 |
| **Pollutants:** | |
| − non-stony material | 0.0 |
| − digestible organic material | 0.0 |

The mineral binder plus bentonite employed is, on the one hand, Solidur, namely Solidur Na-B No. 274, a dry mixture of blast furnace cement and bentonite from Messrs. Dyckerhoff AG, Wiesbaden, FRG. It is determined at what mixing ratio of water to Solidur the slurry just runs from the bottom ($\varnothing$ 20 mm) of a funnel so as to obtain a processability acceptable in practice. This proved to occur at a mixture consisting of 5 parts by weight of water and 3 parts by weight of Solidur. Solidur is intensely mixed with water for 5 minutes, Solidur being added to the water. After preparation of the slurry it is directly mixed with the pre-moistened mixed granulate (7 wt.% moisture) with addition of another small amount of water to raise the moisture content to the optimum value for obtaining the maximum Proctor density (cf the last line of each of Tables 3 and 4 at mixtures 1 and 2). Granulate/Solidur mixtures having different Solidur concentrations (3.0 and 4.5 wt.%, based on the dry granulate) have thus been prepared, from which, subsequently, test pieces may be prepared as further described.

On the other hand, the process is carried out with blast furnace cement A (according to NEN 3550; slag content at least 70 wt.%) from Messrs. CEMIJ, The Netherlands, and bentonite commercially sold under the name of Cebo C.S. from Messrs. Cebo Holland B.V. In order to eliminate the negative effect of the cement on the swelling of the bentonite, a bentonite slurry consisting of 1 part by weight of bentonite per 5 parts by weight of water was made 24 hours before the preparation of the stone mixture proper. The slurry is mixed for 10 minutes in a high speed mixer and then ripened for 24 hours (swelling of the bentonite). The stone mixture proper is then obtained by mixing the pre-moistened mixed granulate (7 wt.% moisture) with cement in a compulsory mixer and then adding the bentonite slurry. The employed amount of blast furnace cement A plus bentonite, based on the dry granulate, is 4.5 wt.% at a weight ratio of blast furnace cement A to bentonite of 2/1. In this case no additional water is added during preparation of the ready-for-use stone mixture since the moisture content is even slightly higher than the optimum moisture content for obtaining the maximum Proctor density (cf the last line of each of Tables 3 and 4 at mixture 3). Test pieces are then made from the ready-for-use stone mixture as described below.

With the different ready-for-use stone mixtures as described above the Proctor test is performed analogously to test 5 of the (above-mentioned) Standard RAW Determinations, normal performance with a

7

compaction energy of 0.6 MNm/m$^3$, with the understanding that the complete gradation of the mixed granulate is used and compaction has taken place in a CBR mould (see test 12.1 of the above Standard RAW Determinations). The tested mixture compositions are given in Table 3.

**Table 3.** Mixture composition.

| Component | wt.% with respect to 100% dry granulate | | |
| --- | --- | --- | --- |
| | mixture 1 | mixture 2 | mixture 3 |
| Solidur | 3.0 | 4.5 | - |
| Blast furnace cement A | - | - | 3.0 |
| Bentonite | - | - | 1.5 |
| Moisture in granulate | 7.0 | 7.0 | 7.0 |
| Moisture in slurry | 5.0 | 7.5 | 7.5 |
| Moisture total | 12.0 | 14.5 | 14.5 |
| Moisture content with respect to total dry matter | 11.7 | 13.9 | 13.9 |

Table 4 gives the maximum Proctor density, namely the maximally obtainable compaction, as well as the associate optimum moisture content.

**Table 4.** Result Proctor test.

| | mixture 1 | mixture 2 | mixture 3 |
| --- | --- | --- | --- |
| Maximum Proctor density within the tested moisture range (kg/m$^3$) | 1894 | 1816 | 1816 |
| Optimum moisture content (wt.%) | 12.1 | 14.6 | 13.3 |

8

The three mixture compositions described above are tested for compressive strength and dynamic modulus of elasticity. The compressive strength is important to the admissible load and the durability, the modulus of elasticity (rigidity) being a measure for the bearing power (the higher the modulus of elasticity, the less deformable is the foundation). In the earlier described manner test pieces are made from each mixture according to the normal Proctor method. The test pieces are hardened at 20°C and 99°C R.V. After 7, 28 and 91 days of hardening the determinations are carried out. The dynamic modulus of elasticity is determined on the basis of ultrasonic measurements. The results are summarized in Table 5.

**Table 5.** Compressive strength and dynamic modulus of elasticity (average values).

| Mixture | 1 | 2 | 3 |
|---|---|---|---|
| Compressive strength (MPa) | | | |
| after 7 days | 2.3 | 2.1 | 2.0 |
| after 28 days | 4.7 | - | 2.6 |
| after 56 days | - | 5.8 | 2.6 |
| after 91 days | 6.0 | 6.1 | 3.1 |
| Dynamic E modulus (GPa) | | | |
| after 7 days | 15.0 | 15.0 | 12.7 |
| after 28 days | 19.9 | - | 13.0 |
| after 56 days | - | 19.8 | - |
| after 91 days | 22.0 | 21.4 | 14.9 |
| Dry density (kg/m$^3$) | | | |
| after 7 days | 1900 | 1806 | 1815 |
| after 28 days | 1884 | - | 1810 |
| after 56 days | - | 1828 | - |
| after 91 days | 1890 | 1810 | 1802 |

By relating the "dry density" in Table 5 to the maximum Proctor density given in Table 4, the density in terms of percentage or the degree of density can be calculated. It always proves to be more than 99%.

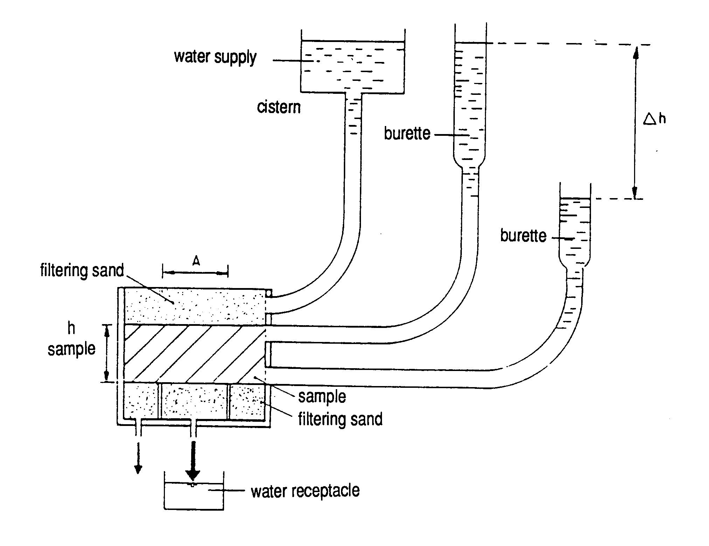

The water permeability is determined at cylindrical test pieces of ⌀ 25 cm and 16 cm in height and the dry density of which is adjusted at a degree of compaction of 100% with respect to the normal Proctor density. The blending of the components has taken place as earlier described. The test pieces are hardened in the mould for 28 days at 20°C and 99% R.V. The water permeability determination is carried out according to the "constant head" method shown in the figure of the enclosed drawings.

Saturation has taken place by pressing water through the sample from below at a drop of i = 30 (drop = pressure head difference Δ h/sample height h), as far as this proved to be possible. After saturation for not more than 7 days it is measured for a certain length of time through how much water the sample flows within a certain time.

The water permeability coefficient k is calculated by the formula:

$$k = \frac{Q}{A \cdot i \cdot t}$$

in which
k = water permeability coefficient of the sample in m/s;
Q = the amount of water seeping through the sample within the length of time t in $m^3$;
A = the cross-section of the sample in $m^2$ (measuring surface at ∅ of 20 cm);
i = the drop; this is the ratio of the pressure difference between the upper and the lower side of the sample and the sample height
(i = $\Delta h/hsample$);
t = the length of time within which the amount Q of water seeped through is collected in seconds.
The measured water permeability coefficient is given in Table 6.

Table 6.

| Water permeability coefficient. | | |
|---|---|---|
| Mixture | measured k value (m/s) | realized degree of compaction (%) |
| 1 | <<* | 100 |
| 2 | $6.10^{-11}$ | 100 |
| 3 | $2.10^{-11}$ | 100 |

* not measurable

**Claims**

1. A method of making a stone foundation on the basis of a granular aggregate and a mineral binder, characterized in that a fluid tight stone foundation is made by
   - forming a mixture containing as essential components a granular aggregate, a mineral binder, bentonite and water, in which
     - the granular aggregate is a completely or practically completely inorganic granulate, the granular size distribution of which satisfies the following specification:

```
screen mesh                  screen residue (cumulative)

(according to NEN 2560)      (wt.%)

C 31.5 mm                    < 30

C 8     mm                   10-65

C 2     mm                   40-80
```

     - the mineral binder and the bentonite, taken together, are used in an amount of 10-100 g per 1 kg dry granulate, and
     - the weight ratio of mineral binder to bentonite is within the range of 1/1-5/1,
   - applying the mixture in a layer of the desired thickness, and
   - compacting this layer.

2. A method as claimed in claim 1, characterized in that the granular size distribution of the granular aggregate satisfies the following specification:

|                        |                |
| ---------------------- | -------------- |
| screen                 | screen residue |
| (according to NEN 2560) | (wt.%)        |
| C 31.5 mm              | < 5            |
| C 8     mm             | 15−45          |
| C 2     mm             | 45−70          |

3. A method as claimed in claim 1 or 2, characterized in that the granular aggregate consists essentially of rubble granulate.

4. A method as claimed in claim 3, characterized in that the rubble granulate is a material which is at least partly porous per se.

5. A method as claimed in claims 1-4, characterized in that the mineral binder and the bentonite, taken together, are used in an amount of 20-60 g per 1 kg dry granulate.

6. A method as claimed in claims 1-5, characterized in that the weight ratio of mineral binder to bentonite ranges from 1.5/1 to 4/1.

7. A method as claimed in claims 1-6, characterized in that a previously prepared dry mixture of blast furnace cement and bentonite ration is added to water and is vigorously stirred, after which the resulting slurry is mixed with the pre-moistened granular aggregate, optionally with addition of an additional amount of water so as to obtain the ready-for-use mixture.

8. A method as claimed in claims 1-6, characterized in that the bentonite is added to water and is vigorously stirred therewith, after which the mixture is allowed to rest so as to swell the bentonite and the thus ripened mixture is combined with the granular aggregate and the mineral binder, optionally with addition of an additional amount of water and a mixing operation being carried out so as to obtain the ready-for-use mixture.

9. A method as claimed in claim 8, characterized in that the mineral binder employed is blast furnace cement having a slag content of at least 70 wt.%.

10. A method as claimed in claims 1-9, characterized in that the layer formed from the mixture is compacted until a degree of compaction of at least 98% with respect to the normal Proctor density as described herein.

11. A method as claimed in claims 1-10, characterized in that the water permeability coefficient (k) of the stone foundation made is less than $1.10^{-10}$ m/s.

12. A method as claimed in claims 1-11, characterized in that after 7 days of hardening the compressive strength of the stone foundation made is at least 1.0 MPa.

13. A method as claimed in claims 1-12, characterized in that the method is used for making a fluid tight foundation layer in building, road-building, or on airports.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-944 237 (CARBONISATION ET CHARBONS ACTIFS)(30-03-1949)<br>* Page 1, lines 18-24,30-31 * | 1,6-8,11 | C 04 B 28/08<br>E 01 C 3/06<br>E 01 C 5/00<br>C 04 B 38/08 // |
| Y | DE-A-3 128 337 (HEILIT + WOERNER BAU)(27-01-1983)<br>* Claims 1-4 * | 1,6-8,11 | (C 04 B 28/08<br>C 04 B 14:10<br>C 04 B 18:18 ) |
| A | BUILDING SCIENCE ABSTRACTS, vol. XL, no. 1, January 1967, pages 472-477, London, GB; W. PLAGEMANN: "The effect of the addition of bentonite on the properties on concrete",<br>& BAUPLAN. BAUTECH., 1964, 20(10), 473-7 | 1,5-7,9 | |
| A | DE-A-3 800 776 (DYCKERHOFF)(27-07-1989)<br>* Abstract * | 1,7,9,13 | |
| A | US-A-4 568 390 (L.F. GELBMAN)(04-02-1986)<br>* Claims 1,15 * | 1,4 | |
| A | US-A-4 095 988 (V. JANCEK et al.)(20-06-1978)<br>* Column 1, lines 41-44 * | 1,13 | |
| A | CHEMICAL ABSTRACTS, vol. 108, no. 14, 1st April 1988, page 350, abstract no. 117820g, Columbus, Ohio, US;<br>& HU-A-42 557 (VIZENITOIPARI TROSZT: VIZGAZDAL-KODASI TUDOMANYOS KUTATO KOZPONT) 28-07-1987 | 1 | **TECHNICAL FIELDS SEARCHED (Int. Cl.5)**<br><br>C 04 B<br>E 01 C<br>E 02 B |
| A | US-A-1 710 921 (R. CROSS et al.)(30-04-1929) | | |
| A | DE-A-2 438 801 (P. WAIBEL)(27-02-1975) | | |

The present search report has been drawn up for all claims

| Place of search | Date of completion of search | Examiner |
|---|---|---|
| The Hague | 03 October 91 | DAELEMAN P.C.A. |

CATEGORY OF CITED DOCUMENTS
X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document